# EUROPÄISCHE PATENTSCHRIFT

(11) **EP 3 488 375 B1**
(45) Veröffentlichungstag und Bekanntmachung des Hinweises auf die Patenterteilung: **10.11.2021**
(21) Anmeldenummer: 17751244.9
(22) Anmeldetag: 20.07.2017
(51) Int. Cl.: H04L 9/32

(54) **CHIPSET MIT GESICHERTER FIRMWARE**
CHIPSET WITH PROTECTED FIRMWARE
JEU DE PUCES À MICROLOGICIEL SÉCURISÉ

(30) Priorität: 22.07.2016 DE 102016008902
(43) Veröffentlichungstag der Anmeldung: 29.05.2019
(73) Patentinhaber: Giesecke+Devrient Mobile Security GmbH, 81677 München (DE)
(72) Erfinder: GÖTZE, Frank, 81379 München (DE); DIETZE, Claus, 82395 Obersöchering (DE)
(74) Vertreter: Ter Meer Steinmeister & Partner
(86) Internationale Anmeldenummer: PCT/EP2017/000885
(87) Internationale Veröffentlichungsnummer: WO 2018/015018

(56) Entgegenhaltungen:
- EP-A2- 2 164 017
- US-A1- 2013 031 374
- THOMAS WINKLER ET AL: "Applications of trusted computing in pervasive smart camera networks", PROCEEDINGS OF THE 4TH WORKSHOP ON EMBEDDED SYSTEMS SECURITY, WESS '09, ACM PRESS, NEW YORK, NEW YORK, USA, 15 October 2009 (2009-10-15), pages 1-10, XP058087970, DOI: 10.1145/1631716.1631718 ISBN: 978-1-60558-700-4

## Beschreibung

### Gebiet der Erfindung

Die Erfindung betrifft ein Chipset für ein mobilfunkfähiges Endgerät mit einem Secure Processor und einen Application Processor, wobei im Endgerät, insbesondere im Application Processor, Firmware implementiert ist.

### Stand der Technik

Die Welt ist mobil vernetzt, und die mobile Vernetzung schreitet weiter. Mobilfunkfähige Endgeräte kommunizieren über Mobilfunknetze. Zu den klassischen mobilfunkfähigen Endgeräten zählen die mobilen Endgeräte wie Smartphones und Mobiltelefone und mobilfunkfähige Tablets. Zu mobilfunkfähigen Endgeräten zählen weiter Regelungsgeräte (Steuerungsgeräte oder Messgeräte oder kombinierte Steuer/Messgeräte) für industrielle Einrichtungen im kommerziellen oder im privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie z.B. Heizungen oder Stromverbraucher mit Endgeräten in Gestalt von Regelungsgeräten.

Das Endgerät hat ein Chipset mit einem oder mehreren Endgeräte-Chips zum Betrieb von Funktionen des Endgeräts. Aktuelle (und ältere) Smartphones haben beispielsweise typischerweise ein Chipset, das zumindest drei Endgeräte-Chips umfasst, nämlich einen Transceiver-IC, der die physikalische Funkkommunikation durchführt, einen Baseband-Prozessor BB (oder gleichbedeutend Modem), der Funktionen zur Datenübertragung über Funkkommunikation auf Protokollebene durchführt, und einen Application-Prozessor AP, auf welchem das Betriebssystem und Anwendungssoftware, z.B. Applikationen (z.B. Apps), ausgeführt werden. Als weitere Endgeräte-Chips können Transceiver-ICs für andere Funkkanäle vorgesehen sein, insbesondere für kurzreichweitige Funkkanäle wie NFC (NFC: near field communication) oder Bluetooth. Auf dem Chipset, insbesondere auf dem Application Processor AP, ist Firmware implementiert, d.h. spezielle Software, durch welche grundlegende Funktionalitäten des Chipset verwirklicht sind. Zur Firmware gehört z.B. das Betriebssystem des Application Processor und evtl. das Betriebssystem weiterer Prozessoren, die ein Betriebssystem haben, hardware-nahe Software z.B. des Transceiver-IC und des Baseband-Prozessor BB, und unter Umständen Programmierschnittstellen (APIs).

Zur Nutzung eines mobilfunkfähigen Endgeräts, wie Smartphone, Mobiltelefon, in einem Mobilfunknetzwerk eines Netzbetreibers enthält das Endgerät ein Teilnehmeridentitätsmodul mit einem Subskriptions-Profil oder kurz Profil. Das Profil bewerkstelligt die Konfiguration des Endgeräts und der Verbindung des Endgeräts im Mobilfunknetz. Das Profil ist durch einen strukturierten Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Teilnehmeridentitätsmodul kann herkömmlicherweise in Träger unterschiedlicher Formfaktoren integriert sein, insbesondere Plug-In und Embedded Träger. Teilnehmeridentitätsmodule in Trägern vom Formfaktor Plug-In (z.B. klassische SIM-Karte) und Embedded (zum Einlöten in ein Endgerät vorgesehenes Modul) sind auf einem dedizierten, eigenen Chip oder SoC (System-on-Chip) angeordnet.

Ein neueres Konzept für den Formfaktor eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" oder "i" versehen und z.B. als integrated UICC, iUICC, iSIM oder iUSIM bezeichnet.

Die Firmware eines Endgeräts sollte durch den Benutzer nicht manipulierbar sein. Generell sind zur Absicherung von Funktionalitäten sogenannte Trusted Platform Modules TPM bekannt, also gesicherte Ausführungsumgebungen auf Chips, mit bestimmten spezifizierten Sicherheitsfunktionen, die ein normaler Chip mit einer normalen Laufzeitumgebung nicht hat. So schlägt die EP 2 164 017 A2 ein hardwarebasiertes automatisches Wiederherstellen eines Computers, der mit Viren oder Trojanern kompromittiert wurde, vor. Dazu wird ein vom Hauptprozessor getrenntes TPM verwendet, um jede einzelne Boot-Komponente auf Integrität zu prüfen und nach erfolgreicher Prüfung, diese Boot-Komponente in den Hauptprozessor zu laden und dort auszuführen.

In einem Endgerät, dessen Chipset einen Secure Processor SP mit einem im Secure Processor SP integrierten iUICC hat, würde sich anbieten, im Secure Processor SP auch ein der Firmware zugewiesenes Trusted Platform Module TPM zu implementieren, durch welches die Firmware des Chipset abgesichert ist.

Die Firmware des Chipset kann für unterschiedliche Typen und Klassen von Endgeräten sehr unterschiedlich gestaltet sein und unterschiedliche Anforderungen an ein die Firmware absicherndes Trusted Platform Module TPM haben. Bei einem im Secure Processor SP implementierten Trusted Platform Module TPM müsste somit für jedes unterschiedlichen Trusted Platform Module TPM der Secure Processor SP unterschiedlich gestaltet sein.

Ein Secure Processor SP muss üblicherweise mit standardisierten Prüfverfahren evaluiert werden. Annähernd jede Änderung des Secure Processor SP macht eine erneute Evaluierung erforderlich. Somit kann ein im Secure Processor SP implementiertes TPM zur Absicherung von Firmware den Evaluierungsaufwand für den Secure Processor immens erhöhen.

### Zusammenfassung der Erfindung

Der Erfindung liegt die Aufgabe zu Grunde, ein Chipset für ein mobilfunkfähiges Endgerät anzugeben, bei dem die Firmware des Chipset auf effiziente Weise abgesichert ist.

Die Aufgabe wird gelöst durch ein Chipset nach Anspruch 1. Vorteilhafte Ausgestaltungen der Erfindung sind in abhängigen Ansprüchen angegeben.

Das erfindungsgemäße Chipset nach Anspruch 1 hat ein im Chipset aber außerhalb des Secure Processor gespeichertes integriertes Trusted Platform Module iTPM, durch das die Firmware abgesichert ist. Das iTPM wird erst zur Ausführung in den Arbeitsspeicher des Secure Processor geladen und dort ausgeführt. Initiiert wird dieses Laden des iTPM durch einen im Application Processor implementierten grundlegenden Bootloader, der sofort bei Inbetriebnahme des Chipset gestartet wird. Ausgehend von diesem Bootloader wird die Ausführung des iTPM im Secure Processor (z.B. im internen exklusiven Arbeitsspeicher des Secure Processor) initiiert und in Folge durch das iTPM die Firmware auf Integrität verifiziert.

Da das der potentiell variablen Firmware zugeordnete Trusted Platform Module iTPM außerhalb des Secure Processor gespeichert ist und erst zur Ausführung in den Arbeitsspeicher des Secure Processor geladen wird, kann der Secure Processor auf sehr grundlegende, möglichst nicht variable Funktionalitäten beschränkt bleiben.

In Bezug auf Evaluierungen des Chipset muss der Secure Processor im Bestfall nur ein einziges Mal in seiner Basisform evaluiert werden. Bedarfsweise wird die Chipkomponente, in der das Trusted Platform Module iTPM dauerhaft gespeichert ist, z.B. ein außerhalb des Secure Processor gelegener nicht-flüchtiger Speicher, separat evaluiert. Dies ist erheblich weniger Aufwand als bei jeder Firmware-Variation, die eine TPM-Variation nach sich zieht, jedes Mal den gesamten Secure Processor neu zu evaluieren.

Somit ist gemäß Anspruch 1 ein Chipset für ein mobilfunkfähiges Endgerät angegeben, bei dem die Firmware des Chipset auf effiziente Weise abgesichert ist.

Die Zuordnung zwischen dem iTPM und dem TPM-Bootloader wird beispielsweise über entsprechende Zeiger (Pointer) erreicht, durch welche die Ausführungskontrolle vom TPM-Bootloader an das iTPM übergeben wird.

Das integrierte Trusted Platform Module iTPM ist gemäß einer Ausführungsform dazu eingerichtet, ein Ergebnis des Überprüfens der Integrität zu erzeugen und an den TPM-Bootloader (BLO) zu melden. Das Ergebnis des Überprüfens ist insbesondere entweder Integrität der Firmware verifiziert oder Integrität der Firmware nicht verifiziert.

Gemäß einer Ausführungsform der Erfindung ist der Bootloader weiter eingerichtet, ein vom integrierten Trusted Platform Module iTPM gemeldetes Ergebnis des Überprüfens der Integrität, insbesondere entweder Integrität verifiziert oder Integrität nicht verifiziert, entgegenzunehmen. Dabei ist der Bootloader weiter eingerichtet, (i) anlässlich eines Ergebnisses des Überprüfens Integrität verifiziert die Inbetriebnahme des Chipset fortzusetzen; und (ii) anlässlich eines Ergebnisses des Überprüfens Integrität nicht verifiziert eine Fehlermaßnahme zu ergreifen, insbesondere die Inbetriebnahme des Chipset nicht fortzusetzen oder abzubrechen. Gemäß dieser Ausführungsform ist somit eine konkrete Implementierungsmöglichkeit angegeben, durch ein integrierten Trusted Platform Module iTPM die Firmware abzusichern, indem nur erfolgreich verifizierte Firmware erfolgreich in vollständigen Betrieb genommen werden kann, verdächtige oder fehlerhafte Firmware hingegen nicht.

Das Chipset umfasst gemäß Ausführungsformen der Erfindung weiter einen dem Secure Processor exklusiv zugeordneten sicheren Arbeitsspeicher, und einen im Chipset aber außerhalb des Secure Processor gelegenen externen nicht-flüchtigen Speicher. Im externen nicht-flüchtigen Speicher ist ein Speicherabbild, auch genannt Image, des iTPM gespeichert. Weiter ist im externen nicht-flüchtigen Speicher ein Speicherabbild (Image) der Firmware, insbesondere eine Speicherabbild (Image) der Firmware des Application Processor gespeichert. Auch Speicherabbilder weiterer Firmware-Komponenten können dort gespeichert sein. Das integrierte Trusted Platform Module iTPM wird dabei gestartet, indem das Speicherabbild (Image) des iTPM aus dem externen nicht-flüchtigen Speicher in den sicheren Arbeitsspeicher geladen wird, so dass also das integrierte Trusted Platform Module iTPM im Secure Processor zur Ausführung gebracht wird. Zum Überprüfen der Firmware auf Integrität wird das Speicherabbild der Firmware, insbesondere Speicherabbild der Firmware des Application Processor, oder ein aus dem Speicherabbild abgeleiteter Wert, insbesondere Hashwert, aus dem externen nicht-flüchtigen Speicher in den sicheren Arbeitsspeicher geladen und dieses Speicherabbild im sicheren Arbeitsspeicher auf Integrität überprüft.

Wahlweise ist das Speicherabbild des iTPM verschlüsselt im externen nicht-flüchtigen Speicher gespeichert und kann exklusiv vom Secure Processor zur Ausführung gebracht werden, nicht aber von anderen, außerhalb des Secure Processor angeordneten Prozessoren, und auch nicht in außerhalb des Secure Processor angeordneten Arbeitsspeichern. Hierdurch ist das iTPM selbst vor Angriffen zur Laufzeit des iTPM abgesichert.

Wahlweise ist der TPM-Bootloader eingerichtet, das integrierte Trusted Platform Module iTPM auf dem Secure Processor zur Ausführung zu bringen, indem er dazu eingerichtet ist folgendes Verfahren zu veranlassen. Schritt 1: Übergabe der Ausführungskontrolle vom TPM-Bootloader an den Secure Processor (SP). Schritte 2, 3: durch den Secure Processor, genauer durch eine CPU oder einen Prozessor Core des Secure Processor, Laden des integrierten Trusted Platform Module iTPM in den Secure Processor und Ausführen des integrierten Trusted Platform Module iTPM im Secure Processor.

Das Laden des integrierten Trusted Platform Module iTPM in den Secure Processor wird gemäß Ausführungsformen der Erfindung durchgeführt als Laden des Speicherabbilds aus dem externen nicht-flüchtigen Speicher in den sicheren Arbeitsspeicher des Secure Processor.

Das in den sicheren Arbeitsspeicher geladene Speicherabbild wird bedarfsweise, falls es im externen nicht-flüchtigen Speicher verschlüsselt abgespeichert ist, im sicheren Arbeitsspeicher entschlüsselt und dann dort zur Ausführung gebracht.

### Kurze Beschreibung der Zeichnungen

Im Folgenden wird die Erfindung an Hand von Ausführungsbeispielen und unter Bezugnahme auf die Zeichnung näher erläutert, in der zeigt:

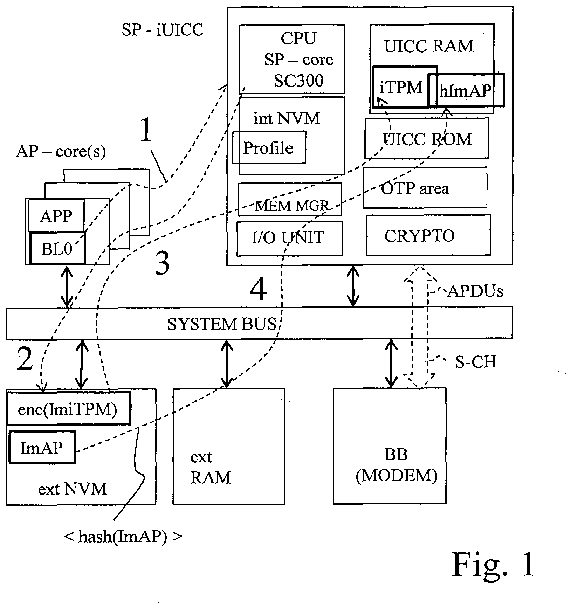

- Fig. 1: in schematischer Darstellung ein Chipset gemäß einer Ausführungs-form der Erfindung.

### Detaillierte Beschreibung von Ausführungsbeispielen

Fig. 1 zeigt, in schematischer Darstellung, ein Chipset gemäß einer Ausführungsform der Erfindung.

Das Chipset umfasst einen Secure Processor SP, der unter anderem die Funktion eines integrierten Teilnehmeridentitätsmoduls iUICC erfüllt. Der Secure Processor SP hat eine CPU oder - gleichbedeutend - einen Prozessor Core, einen internen nicht-flüchtigen Speichern int NVM (z.B. Flash oder/und EEPROM), in dem ein oder mehrere Subskriptions-Profile gespeichert sind, eine Speicherverwaltung MEM MGR, eine Schnittstelle I/O Unit, einen internen, dem Secure Processor SP exklusiv zugewiesenen Arbeitsspeicher UICC RAM, einen internen exklusiven Permanentspeicher UICC ROM des Secure Processor SP (der ROM ist optional; stattdessen kann nur Flashspeicher vorgesehen sein, wie in realen Prozessoren zunehmend der Fall ist), einen vergleichsweise kleinen speziell abgesicherten Permanentspeicher OTP area (in Speichertechnologie z.B. ROM, EEPROM oder Flash verwirklicht), und eine Krypto-Einheit CRYPTO, z.B. einen Crypto-Coprozessor.

Das Chipset umfasst weiter einen Application Processor AP mit - hier mehreren - Prozessor Cores (Prozessorkernen). Im Application Processor AP sind Applikationen als Apps APP implementiert. Erfindungsgemäß ist im Application Processor AP weiter ein Bootloader BL0 implementiert, der sogleich beim Start des Chipset beginnt hochzufahren.

Weiter umfasst das Chipset einen externen nicht-flüchtigen Speicher ext NVM, in dem ein verschlüsseltes Speicherabbild oder - gleichbedeutend - Image enc(ImiTPM) eines integrierten Trusted Platform Module iTPM gespeichert ist. Weiter ist im externen nicht-flüchtigen Speicher ext NVM ein Speicherabbild oder, gleichbedeutend, Image ImAP der Firmware des Application Processor AP gespeichert.

Das Chipset umfasst zudem einen im Chipset allgemein zugänglichen externen Arbeitsspeicher ext RAM und einen Baseband Processor BB (Modem).

Die Komponenten SP, AP, ext NVM, ext RAM, BB des Chipset sind über einen System Bus des Chipset miteinander verbunden.

Physisch über den System Bus kann zwischen dem Baseband Processor BB und dem Secure Processor SP eine gesicherter Übertragungskanal S-CH eingerichtet werden, über den zwischen dem Baseband Processor BB und dem Secure Processor SP Kommandos in Format von APDU Kommandos ausgetauscht werden können.

Im Folgenden wird anhand von Fig. 1 ein Verfahren zur Verifizierung von Firmware des Chipset beschrieben, verbunden mit einem kontrollierten Hochfahren und ggf. Abbruch des Hochfahrens des Chipset.

Der Betrieb des Chipset wird gestartet. Falls das Chipset in ein Smartphone eingebaut ist, wird der Betrieb z.B. gestartet indem das Smartphone am bestimmungsgemäßen Einschalter eingeschaltet wird.

Anlässlich des Startens des Betriebs des Chipset wird der im Application Processor AP implementierte, dem iTPM zugeordnete TPM-Bootloader BL0 gestartet. Durch die Zuordnung des Bootloader BL0 zum iTPM wird erreicht, dass der Bootloader BL0 bevor er weiter hochfährt eine Firmware Verifizierung anstößt. Hierzu übergibt (Schritt 1) der Bootloader BL0 die Kontrolle über die Programmausführung an den Secure Processor SP, verbunden mit einer Angabe, dass das iTPM zur Firmware-Verifizierung zu starten ist. Die Übergabe erfolgt z.B. mittels eines entsprechenden Zeigers/Pointers im Bootloader. Der Secure Processor SP (Schritt 2) ruft das verschlüsselte Image des iTPM, enc(ImiTPM), aus dem externen nicht-flüchtigen Speicher auf und (Schritt 3) lädt es in den internen exklusiven Arbeitsspeicher UICC RAM des Secure Processor SP. Dies erfolgt z.B. mittels eines entsprechenden Zeigers/ Pointers oder einer anderen geeigneten Adressangabe im Secure Processor SP, wodurch schließlich der Aufruf des iTPM aus dem externen nicht-flüchtigen Speicher ext NVM in den internen Arbeitsspeicher UICC RAM des Secure Processor SP erreicht wird. Im internen exklusiven Arbeitsspeicher UICC RAM entschlüsselt der Secure Processor Core CPU / SP-core das verschlüsselte Image enc(ImiTPM) und bringt es zur Ausführung. Das ausführende integrierte Trusted Platform Module iTPM kommt seiner eingeschriebenen Aufgabe der Firmware Verifizierung nach, im Beispiel aus Fig. 1 der Firmware des Application Processor AP. Hierzu lädt das iTPM einen Hashwert hash(ImAP), hImAP, über das im externen nicht-flüchtigen Speicher ext NVM gespeicherte Image ImAP des Application Processor AP in den internen Arbeitsspeicher UICC RAM des Secure Processor SP. Zur Verifizierung der Application Processor Firmware hImAP wird beispielsweise der Hashwert über die Application Processor Firmware hImAP erneut gebildet und mit dem im externen Arbeitsspeicher ext RAM gespeicherten Hashwert verglichen.

Das integrierte Trusted Platform Module iTPM prüft also die Firmware des Application Processor AP auf Integrität (Schritt 4). Das integrierte Trusted Platform Module iTPM erzeugt ein Ergebnis des Überprüfens der Integrität und meldet das Ergebnis zurück an den TPM-Bootloader BL0. Das Ergebnis ist insbesondere entweder Integrität der Firmware verifiziert oder Integrität der Firmware nicht verifiziert, d.h. Integrität zweifelhaft oder nicht vorhanden. Wird vom iTPM gemeldet, dass die Integrität der überprüften Firmware erfolgreich verifiziert wurde, bootet der Bootloader BL0 das Chipset weiter und setzt es planmäßig vollständig in Betrieb. Wird vom iTPM gemeldet, dass die Integrität der Firmware nicht erfolgreich verifiziert werden konnte (d.h. die Integrität der Firmware zweifelhaft ist oder nicht vorliegt), wird die der Bootvorgang und damit die Inbetriebnahme des Chipset nicht fortgesetzt oder abgebrochen. Zusätzlich (oder alternativ) können weitere Fehlermaßnahme ergriffen werden.

## Patentansprüche

1. Chipset für ein Endgerät (ME), das Chipset umfassend zumindest einen, die Funktion eines integrierten Teilnehmeridentitätsmoduls, iUICC erfüllenden Secure Processor (SP) mit nicht-variabler Funktionalität und einen Application Processor (AP), wobei im Endgerät (ME), insbesondere im Application Processor (AP), Firmware implementiert ist,
wobei das Chipset umfasst:
- ein im Secure Processor (SP) ausführbares, außerhalb des Secure Processor (SP) abgespeichertes, integriertes Trusted Platform Module, iTPM, als gesicherte Ausführungsumgebung zur Absicherung der Firmware, wobei die Firmware variabel für unterschiedliche Klassen oder Typen von Endgeräten (ME) ist und unterschiedliche Anforderungen an das die Firmware absichernde iTPM hat; und
- einen im Application Processor (AP) implementierten, dem iTPM zugeordneten TPM-Bootloader (BL0), der anlässlich eines Startens des Betriebs des Chipset gestartet wird;
- wobei der TPM-Bootloader (BLO) eingerichtet ist, das integrierte Trusted Platform Module iTPM auf dem Secure Processor (SP) zur Ausführung zu bringen (1, 2, 3); und
- wobei das integrierte Trusted Platform Module iTPM eingerichtet ist, die Firmware, insbesondere die Firmware des Application Processor (AP), auf Integrität zu überprüfen (4).

2. Chipset nach Anspruch 1, wobei das integrierte Trusted Platform Module iTPM eingerichtet ist, ein Ergebnis des Überprüfens der Integrität, insbesondere entweder Integrität der Firmware verifiziert oder Integrität der Firmware nicht verifiziert, zu erzeugen und an den TPM-Bootloader (BLO) zu melden.

3. Chipset nach Anspruch 2, wobei der Bootloader (BLO) weiter eingerichtet ist, ein vom integrierten Trusted Platform Module iTPM gemeldetes Ergebnis des Überprüfens der Integrität, insbesondere entweder Integrität verifiziert oder Integrität nicht verifiziert, entgegenzunehmen, und:
(i) anlässlich eines Ergebnisses des Überprüfens Integrität verifiziert die Inbetriebnahme des Chipset fortzusetzen; und
(ii) anlässlich eines Ergebnisses des Überprüfens Integrität nicht verifiziert eine Fehlermaßnahme zu ergreifen, insbesondere die Inbetriebnahme des Chipset nicht fortzusetzen oder abzubrechen.

4. Chipset nach einem der Ansprüche 1 bis 3, weiter umfassend:
- einen dem Secure Processor (SP) exklusiv zugeordneten sicheren Arbeitsspeicher (UICC RAM);
- einen im Chipset aber außerhalb des Secure Processor gelegenen externen nicht-flüchtigen Speicher (ext NVM), in dem gespeichert ist:
-- ein Speicherabbild (Image TPM, ImiTPM) des iTPM; und
-- ein Speicherabbild der Firmware, insbesondere Speicherabbild (Image AP, ImAP) der Firmware des Application Processor (AP); wobei
- um das integrierte Trusted Platform Module iTPM zu starten, das Speicherabbild (ImiTPM) des iTPM aus dem externen nicht-flüchtigen Speicher (ext NVM) in den sicheren Arbeitsspeicher (UICC RAM) geladen wird und dort zur Ausführung gebracht wird; und
- zum Überprüfen der Firmware auf Integrität das Speicherabbild der Firmware, insbesondere Speicherabbild (ImAP) der Firmware des Application Processor (AP), oder ein aus dem Speicherabbild abgeleiteter Wert, insbesondere Hashwert, aus dem externen nicht-flüchtigen Speicher (ext NVM) in den sicheren Arbeitsspeicher (UICC RAM) geladen wird und dieses Speicherabbild im sicheren Arbeitsspeicher (UICC RAM) auf Integrität überprüft wird.

5. Chipset nach Anspruch 4, wobei das Speicherabbild (ImiTPM) des iTPM verschlüsselt im externen nicht-flüchtigen Speicher (ext NVM) gespeichert ist und exklusiv vom Secure Processor (SP) zur Ausführung gebracht werden kann.

6. Chipset nach einem der Ansprüche 1 bis 5, wobei der TPM-Bootloader (BLO) eingerichtet ist, das integrierte Trusted Platform Module iTPM auf dem Secure Processor (SP) zur Ausführung zu bringen, indem er dazu eingerichtet ist folgendes Verfahren zu veranlassen:
- Übergabe (1) der Ausführungskontrolle vom TPM-Bootloader (BLO) an den Secure Processor (SP);
- durch den Secure Processor (SP), Laden (2, 3) des integrierten Trusted Platform Module iTPM, in den Secure Processor (SP);
- Ausführen des integrierten Trusted Platform Module iTPM im Secure Processor (SP).

7. Chipset nach Anspruch 4 und 6 in Kombination, wobei das Laden des integrierten Trusted Platform Module iTPM, in den Secure Processor (SP) durchgeführt wird als Laden des Speicherabbilds (ImiTPM) aus dem externen nicht-flüchtigen Speicher (ext NVM) in den sicheren Arbeitsspeicher (UICC RAM).

8. Chipset nach Anspruch 7 und 5 in Kombination, wobei das in den sicheren Arbeitsspeicher (UICC RAM) geladene Speicherabbild (ImiTPM) im sicheren Arbeitsspeicher (UICC RAM) entschlüsselt wird und dann zur Ausführung gebracht wird.

## Claims

1. A chipset for a terminal (ME), the chipset comprising at least one, the function of an integrated subscriber identity module, iUICC, fulfilling, Secure Processor (SP) with non-variable functionality and an Application Processor (AP), wherein firmware is implemented in the terminal (ME), in particular in the Application Processor (AP),
wherein the chipset comprises:
- an integrated Trusted Platform Module, iTPM, executable in the Secure Processor (SP) and stored outside the Secure Processor (SP) as a secure execution environment for securing the firmware, wherein the firmware is variable for different classes or types of terminals (ME) and has different requirements for the iTPM securing the firmware; and
- a TPM Bootloader (BLO) implemented in the Application Processor (AP) and assigned to the iTPM, which is started on the occasion of starting the operation of the chipset;
- wherein the TPM Bootloader (BLO) is configured to bring the integrated Trusted Platform Module, iTPM, to execution (1, 2, 3) on the Secure Processor (SP); and
- wherein the integrated Trusted Platform Module, iTPM, is configured to check (4) the firmware, in particular the firmware of the application processor (AP), for integrity.

2. The chipset according to claim 1, wherein the integrated Trusted Platform Module, iTPM, is configured to generate and to report to the TPM Bootloader (BLO) a result of checking the integrity, in particular either integrity of the firmware verified, or integrity of the firmware not verified.

3. The chipset according to claim 2, wherein the Bootloader (BLO) is further configured to receive a result reported by the integrated Trusted Platform Module, iTPM, of checking the integrity, either integrity verified, or integrity not verified, and:
(i) to continue the putting into operation of the chipset on the occasion of a result of checking integrity verified; and
(ii) to affect an error measure, in particular to not continue or to abort the putting into operation of the chipset on the occasion of a result of checking integrity not verified.

4. The chipset according to any one of the claims 1 to 3, further comprising:
- a secure working memory (UICC RAM) assigned exclusively to the Secure Processor (SP);
- an external non-volatile storage (ext NVM) situated in the chipset but outside the Secure Processor, in which is stored:
- - a memory image (Image TPM, ImiTPM) of the iTPM; and
- - a memory image of the firmware, in particular memory image (Image AP, ImAP) of the firmware of the Application Processor (AP); wherein
- to start the integrated Trusted Platform Module, iTPM, the memory image (ImiTPM) of the iTPM is loaded from the external non-volatile storage (ext NVM) into the secure working memory (UICC RAM) and brought to execution there; and
- for checking the firmware for integrity, the memory image (ImAP) of the firmware of the Application Processor (AP), or a value derived from the memory image, in particular a hash value, is loaded from the external non-volatile storage (ext NVM) into the secure working memory (UICC RAM) and this memory image is checked in the secure working memory (UICC RAM) for integrity.

5. The chipset according to claim 4, wherein the storage image (ImiTPM) of the iTPM is stored in encrypted form in the external non-volatile storage (ext NVM) and can be brought to execution exclusively by the Secure Processor (SP).

6. The chipset according to any one of the claims 1 to 5, wherein the TPM Bootloader (BLO) is configured to bring the integrated Trusted Platform Module, iTPM, to execution on the Secure Processor (SP) by being configured to prompt the following method:
- transferring (1) the execution control of the TPM Bootloader (BLO) to the Secure Processor (SP);
- by the Secure Processor (SP), loading (2, 3) the integrated Trusted Platform Module, iTPM, into the Secure Processor (SP);
- executing the integrated Trusted Platform Module, iTPM, in the Secure Processor (SP).

7. The chipset according to claim 4 and 6 in combination, wherein the loading of the integrated Trusted Platform Module, iTPM, into the Secure Processor (SP) is carried out as loading the memory image (ImiTPM) from the external non-volatile storage (ext NVM) into the secure working memory (UICC RAM).

8. The chipset according to claim 7 and 5 in combination, wherein the memory image (ImiTPM) loaded into the secure working memory (UICC RAM) is decrypted in the secure working memory (UICC RAM) and is then brought to execution.

## Revendications

1. Jeu de puces pour un terminal (ME), le jeu de puces comportant au moins un processeur sécurisé (SP) remplissant la fonction d'un module d'identité de l'abonné intégré, iUICC, ayant une fonctionnalité invariable, et un processeur d'application (AP), dans lequel un microprogramme est implémenté dans le terminal (ME), en particulier dans le processeur d'application (AP),
dans lequel le jeu de puces comporte :
- un module de plate-forme sécurisé intégré, iTPM, exécutable dans le processeur sécurisé (SP) et stocké à l'extérieur du processeur sécurisé (SP), servant d'environnement d'exécution sécurisé pour assurer la protection du microprogramme, dans lequel le microprogramme est variable en fonction de différentes classes ou de différents types de terminaux (ME) et a différentes exigences concernant l'iTPM assurant la protection du microprogramme ; et
- un chargeur d'amorçage de TPM (BLO) associé à l'iTPM et implémenté dans le processeur d'application (AP), lequel chargeur d'amorçage est démarré lors d'un début du fonctionnement du jeu de puces ;
- dans lequel le chargeur d'amorçage de TPM (BLO) est conçu pour entraîner (1, 2, 3) l'exécution du module de plate-forme sécurisé intégré iTPM sur le processeur sécurisé (SP) ; et
- dans lequel le module de plate-forme sécurisé intégré iTPM est conçu pour contrôler (4) l'intégrité du microprogramme, en particulier du microprogramme du processeur d'application (AP).

2. Jeu de puces selon la revendication 1, dans lequel le module de plate-forme sécurisé intégré iTPM est conçu pour générer un résultat du contrôle de l'intégrité, en particulier si l'intégrité du microprogramme est vérifiée ou si l'intégrité du microprogramme n'est pas vérifiée, et pour le notifier au chargeur d'amorçage de TPM (BLO).

3. Jeu de puces selon la revendication 2, dans lequel le chargeur d'amorçage (BLO) est en outre conçu pour recevoir un résultat du contrôle d'intégrité notifié par le module de plate-forme sécurisé intégré iTPM, indiquant en particulier si l'intégrité est vérifiée ou si l'intégrité n'est pas vérifiée, et :
(i) à la suite d'un résultat du contrôle d'intégrité vérifiée, poursuivre la mise en fonctionnement du jeu de puces ; et
(ii) à la suite d'un résultat du contrôle d'intégrité non vérifiée, prendre une mesure en cas d'erreur, en particulier pour poursuivre ou interrompre la mise en fonctionnement du jeu de puces.

4. Jeu de puces selon l'une des revendications 1 à 3, comportant en outre :
- une mémoire de travail (UICC RAM) sécurisée exclusivement associée au processeur sécurisé (SP) ;
- une mémoire non volatile externe (ext NVM) située dans le jeu de puces mais à l'extérieur du processeur sécurisé, dans laquelle est stockée :
-- une image mémoire (Image TPM, ImiTPM) de l'iTPM ; et
-- une image mémoire du microprogramme, en particulier une image mémoire (Image AP, ImAP) du microprogramme du processeur d'application (AP) ; dans lequel
- pour démarrer le module de plate-forme sécurisé intégré iTPM, l'image mémoire (ImiTPM) de l'iTPM est chargée à partir de la mémoire non volatile externe (ext NVM) dans la mémoire de travail sécurisée (UICC RAM) et est amenée à y être exécutée ; et
- afin de contrôler l'intégrité du microprogramme, l'image mémoire du microprogramme, en particulier l'image mémoire (ImAP) du microprogramme du processeur d'application (AP), ou une valeur déduite de l'image mémoire, en particulier une valeur de hachage, est chargée à partir de la mémoire non volatile externe (ext NVM) dans la mémoire de travail sécurisée (UICC RAM) et l'intégrité de cette image mémoire est contrôlée dans la mémoire de travail (UICC RAM).

5. Jeu de puces selon la revendication 4, dans lequel l'image mémoire (ImiTPM) de l'iTPM est stockée de manière cryptée dans la mémoire non volatile externe (ext NVM) et peut être amenée à être exécutée exclusivement à partir du processeur sécurisé (SP).

6. Jeu de puces selon l'une des revendications 1 à 5, dans lequel le chargeur d'amorçage de TPM (BLO) est conçu pour entraîner l'exécution du module de plate-forme sécurisé intégré iTPM sur le processeur sécurisé (SP), le jeu de puces étant conçu pour permettre de mettre en œuvre le procédé suivant comportant les étapes consistant à :
- transférer (1) le contrôle d'exécution du chargeur d'amorçage de TPM (BLO) au processeur sécurisé (SP) ;
- charger (2, 3), par l'intermédiaire du processeur sécurisé (SP), le module de plate-forme sécurisé intégré iTPM dans le processeur sécurisé (SP) ;
- exécuter le module de plate-forme sécurisé intégré iTPM dans le processeur sécurisé (SP).

7. Jeu de puces selon les revendications 4 et 6 combinées, dans lequel le chargement du module de plate-forme sécurisé intégré iTPM dans le processeur sécurisé (SP) est réalisé comme un chargement de l'image mémoire (ImiTPM) à partir de la mémoire non volatile externe (ext NVM) dans la mémoire de travail sécurisée (UICC RAM).

8. Jeu de puces selon les revendications 7 et 5 combinées, dans lequel l'image mémoire (ImiTPM) chargée dans la mémoire de travail sécurisée (UICC RAM) est décryptée dans la mémoire de travail sécurisée (UICC RAM) et ensuite amenée à être exécutée.
